# EUROPEAN PATENT APPLICATION

(11) **EP 4 625 778 A1**
(43) Date of publication of application: **01.10.2025**
(21) Application number: 25166139.3
(22) Date of filing: 25.03.2025
(51) Int. Cl.: H02K 7/08, H02K 11/215, H02K 41/03, H02K 1/18, H02K 1/28

(54) **STATOR CORE SHAFT, LINEAR MOTOR, ELECTROMAGNETIC SUSPENSION, AND VEHICLE**

(30) Priority: 29.03.2024 CN 202410385508
(71) Applicant: BYD Company Limited, Shenzhen, Guangdong 518118 (CN)
(72) Inventor: LIU, Jun, Shenzhen (CN); MA, Bingqing, Shenzhen (CN); TAN, Guodong, Shenzhen (CN)
(74) Representative: Taor, Simon Edward William

(57) **Abstract**

The present invention discloses a stator core shaft, a linear motor, an electromagnetic suspension, and a vehicle. The stator core shaft includes a core shaft body, a position-sensor induction member, and a core shaft sleeve. The position-sensor induction member is mounted on an outer peripheral wall of the core shaft body; and the core shaft sleeve is sleeved on an outer periphery of the core shaft body and covers the position-sensor induction member. According to the stator core shaft in the embodiments of the present invention, the core shaft sleeve is sleeved on the outer periphery of the core shaft body, and the core shaft sleeve covers the position-sensor induction member, so that the outer surface of the stator core shaft can form the complete circumferential surface, and the position-sensor induction member can be avoided from interfering with the external component (for example, a bearing) due to protruding from the stator core shaft. In addition, the good sealing structure can be formed on the outer peripheral surface of the stator core shaft.

## Description

### FIELD

The present invention relates to the field of vehicle technologies, and more specifically, to a stator core shaft, a linear motor, an electromagnetic suspension, and a vehicle.

### BACKGROUND

A position-sensor induction member of a linear motor is mounted on a stator core shaft, and is configured to detect a position change situation when a stator assembly and a promoter assembly move relative to each other. In the related art, a mounting manner of the position-sensor induction member and the stator core shaft causes at least a part of the position-sensor induction member to protrude from an outer peripheral wall of the stator core shaft. When a bearing fits with the stator core shaft, interference between the position-sensor induction member and the bearing easily occurs, resulting in wear on an inner wall of the bearing and even jamming of the linear motor. In addition, an outer peripheral surface of the stator core shaft cannot form a good sealing structure, and external moisture easily enters the linear motor. As a result, the linear motor easily fails. Therefore, improvements need to be made.

### SUMMARY

Embodiments of the present invention aim to resolve at least one of the technical problems in the related art. Therefore, an objective of the present invention is to provide a stator core shaft. A core shaft sleeve is sleeved on an outer periphery of a core shaft body, and the core shaft sleeve covers a position-sensor induction member, so that an outer surface of the stator core shaft can form a complete circumferential surface, and the position-sensor induction member can be avoided from interfering with an external component (for example, a bearing) because the position-sensor induction member protrudes from the stator core shaft. In addition, a good sealing structure can be formed on an outer peripheral surface of the stator core shaft.

Embodiments of the present invention provide a linear motor having the foregoing stator core shaft.

Embodiments of the present invention provide an electromagnetic suspension having the foregoing linear motor.

Embodiments of the present invention further provides a vehicle having the foregoing electromagnetic suspension.

A stator core shaft according to an embodiment of a first aspect of the present invention includes: a core shaft body; a position-sensor induction member, mounted on an outer peripheral wall of the core shaft body; and a core shaft sleeve, sleeved around the core shaft body and covering the position-sensor induction member.

According to the stator core shaft in the embodiments of the present invention, the core shaft sleeve is sleeved on the outer periphery of the core shaft body, and the core shaft sleeve covers the position-sensor induction member, so that the outer surface of the stator core shaft can form the complete circumferential surface, and the position-sensor induction member can be avoided from interfering with the external component (for example, a bearing) due to protruding from the stator core shaft. In addition, the good sealing structure can be formed on the outer peripheral surface of the stator core shaft.

According to some embodiments of the present invention, an accommodating space is defined between the core shaft sleeve and the core shaft body, and the position-sensor induction member is located in the accommodating space.

According to some embodiments of the present invention, the accommodating space is open on an axial side of the core shaft body to form an insertion port, and the position-sensor induction member is adapted to be mounted into the accommodating space through the insertion port.

According to some embodiments of the present invention, the position-sensor induction member is in an interference fit with the accommodating space.

According to some embodiments of the present invention, the position-sensor induction member is fixed in the accommodating space by an adhesive layer.

According to some embodiments of the present invention, a glue filling gap is defined between the position-sensor induction member and an inner wall of the accommodating space, and the adhesive layer is filled in the glue filling gap.

According to some embodiments of the present invention, a limiting convex ring arranged around the core shaft body is formed on an outer peripheral wall of the core shaft body, and an axial end of the core shaft sleeve abuts against the limiting convex ring to axially limit the core shaft sleeve.

According to some embodiments of the present invention, the limiting convex ring does not protrude from an outer peripheral surface of the core shaft sleeve.

According to some embodiments of the present invention, an insertion port is defined between an other axial end of the core shaft sleeve and the core shaft body, and the position-sensor induction member is adapted to be mounted into the accommodating space through the insertion port.

According to some embodiments of the present invention, the outer peripheral wall of the core shaft body is formed with a mounting groove, the position-sensor induction member is mounted in the mounting groove, and the mounting groove forms at least a part of the accommodating space.

According to some embodiments of the present invention, at least a part of a bottom wall of the mounting groove is formed as a first mounting surface, a surface of the position-sensor induction member facing the mounting surface is a second mounting surface, and both the first mounting surface and the second mounting surface are planes.

According to some embodiments of the present invention, the first mounting surface is attached to the second mounting surface.

According to some embodiments of the present invention, a surface of the position-sensor induction member facing away from the bottom wall of the mounting groove is a sensor outer surface, and the sensor outer surface is an arc-shaped surface and is coaxially arranged with the core shaft body.

According to some embodiments of the present invention, the core shaft sleeve is in an interference fit with the core shaft body.

According to some embodiments of the present invention, the position-sensor induction member is a magnetic position-sensor induction member, and the core shaft sleeve is a non-magnetic conductive member.

According to some embodiments of the present invention, an axial dimension of the core shaft sleeve is larger than an axial dimension of the position-sensor induction member along the core shaft body and smaller than an axial dimension of the core shaft body.

According to some embodiments of the present invention, the core shaft sleeve includes a sleeve body and a mounting boss, the mounting boss is arranged on an outer peripheral wall of the sleeve body, and the mounting boss is configured to mount and fix a buffer pad.

According to some embodiments of the present invention, a wall thickness of the core shaft sleeve ranges from 1 mm to 4 mm.

According to some embodiments of the present invention, the core shaft body is an integrated part.

A linear motor according to an embodiment of a second aspect of the present invention includes: the stator core shaft according to the embodiment of the first aspect of the present invention; a stator assembly, the stator assembly being sleeved on an outer periphery of the stator core shaft and fixed relative to the stator core shaft, and the stator assembly and the core shaft sleeve being arranged in an axial direction of the core shaft body; and a promoter assembly, sleeved on an outer periphery of the stator assembly, the promoter assembly and the stator assembly being relatively movable in an axial direction of the stator core shaft, an axial end of the promoter assembly being provided with an assembly through hole, the core shaft sleeve passing through the assembly through hole, and a position-sensor read head corresponding to the position-sensor induction member being provided on the promoter assembly.

According to the linear motor in the embodiments of the present invention, the core shaft sleeve is sleeved on the outer periphery of the core shaft body, and the core shaft sleeve covers the position-sensor induction member, so that the outer surface of the stator core shaft can form the complete circumferential surface, and the position-sensor induction member can be avoided from interfering with the external component (for example, a bearing) due to protruding from the stator core shaft. In addition, the good sealing structure can be formed on the outer peripheral surface of the stator core shaft.

According to some embodiments of the present invention, the linear motor includes: a first bearing, the first bearing being located in the assembly through hole and is mounted on the promoter assembly, and the first bearing being sleeved on an outer periphery of the core shaft sleeve.

According to some embodiments of the present invention, the linear motor includes: an oil seal, the oil seal being located in the assembly through hole and mounted on the promoter assembly, the oil seal being sleeved on an outer periphery of the core shaft sleeve and spaced apart from the first bearing in an axial direction, one end of the assembly through hole running through the promoter assembly being a hole outer end, and the oil seal being located on a side of the first bearing adjacent to the hole outer end.

According to some embodiments of the present invention, the promoter assembly includes a motor housing, the linear motor further includes a guide rod, the guide rod is arranged in the motor housing and extends in an axial direction of the promoter, the core shaft body forms a guide channel extending in the axial direction of the stator core shaft, and the guide rod is slidably accommodated in the guide channel in an axial direction of the stator assembly.

According to some embodiments of the present invention, the position-sensor read head is located on an axial side of the promoter assembly and adjacent to the assembly through hole, and the position-sensor read head is located on an outer peripheral side of the core shaft sleeve.

An electromagnetic suspension according to an embodiment of a third aspect of the present invention includes: the linear motor according to the embodiment of the second aspect of the present invention.

According to the electromagnetic suspension in the embodiments of the present invention, the foregoing linear motor is arranged, the core shaft sleeve is sleeved on the outer periphery of the core shaft body, and the core shaft sleeve covers the position-sensor induction member, so that the outer surface of the stator core shaft can form the complete circumferential surface, and the position-sensor induction member can be avoided from interfering with the external component (for example, a bearing) due to protruding from the stator core shaft. In addition, the good sealing structure can be formed on the outer peripheral surface of the stator core shaft.

A vehicle according to an embodiment of a fourth aspect of the present invention includes: the electromagnetic suspension according to the embodiment of the third aspect of the present invention.

According to the vehicle in the embodiments of the present invention, the foregoing electromagnetic suspension is arranged, the electromagnetic suspension includes the linear motor, the foregoing stator core shaft is arranged, the foregoing linear motor is arranged, the core shaft sleeve is sleeved on the outer periphery of the core shaft body, and the core shaft sleeve covers the position-sensor induction member, so that the outer surface of the stator core shaft can form the complete circumferential surface, and the position-sensor induction member can be avoided from interfering with the external component (for example, a bearing) due to protruding from the stator core shaft. In addition, the good sealing structure can be formed on the outer peripheral surface of the stator core shaft.

Some additional aspects and advantages of the present invention are provided in the following description, and some become obvious in the following description or can be learned of by practicing the present invention.

### BRIEF DESCRIPTION OF THE DRAWINGS

The foregoing and/or additional aspects and advantages of embodiments of the present invention will become apparent and comprehensible in the description of the embodiments made with reference to the following accompanying drawings.
FIG. 1 is a cross-sectional view of a linear motor according to some embodiments of the present invention;
FIG. 2 is an enlarged view at A in FIG. 1;
FIG. 3 is a top view of a stator assembly and a stator core shaft of the linear motor in FIG. 1;
FIG. 4 is a three-dimensional schematic diagram of a stator core shaft of the linear motor in FIG. 1;
FIG. 5 is a schematic assembly diagram of a core shaft body and a position-sensor induction member of the linear motor in FIG. 1;
FIG. 6 is a schematic assembly diagram of a core shaft body and a position-sensor induction member of the linear motor in FIG. 1 from another angle;
FIG. 7 is a schematic assembly diagram of a stator core shaft, a first bearing, and an oil seal in FIG. 1;
FIG. 8 is a cross-sectional view along a line B-B in FIG. 7;
FIG. 9 is a partial cross-sectional view of a stator core shaft of the linear motor in FIG. 1;
FIG. 10 is a partial cross-sectional view of a stator assembly and a stator core shaft of the linear motor in FIG. 1; and
FIG. 11 is a cross-sectional view of a core shaft sleeve of a stator core shaft in FIG. 1.

### DETAILED DESCRIPTION

The following describes embodiments of the present invention in detail. Examples of the embodiments are shown in the accompanying drawings, and same or similar reference signs in all the accompanying drawings indicate same or similar components or components having same or similar functions. The embodiments described below with reference to the accompanying drawings are exemplary and used only for explaining the present invention, and should not be construed as a limitation on the present invention.

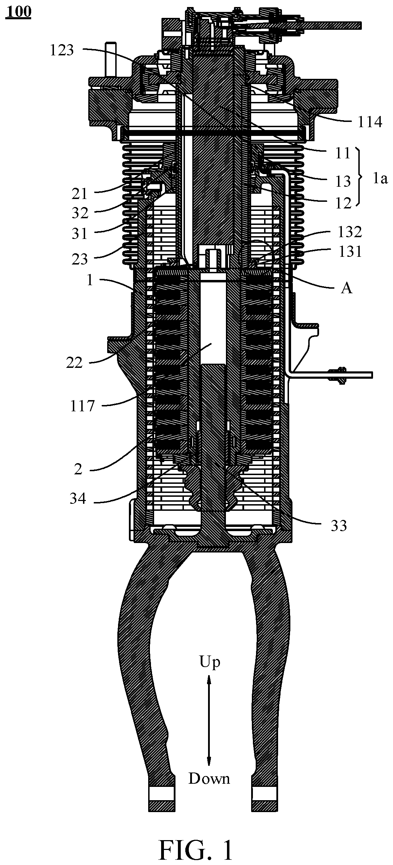

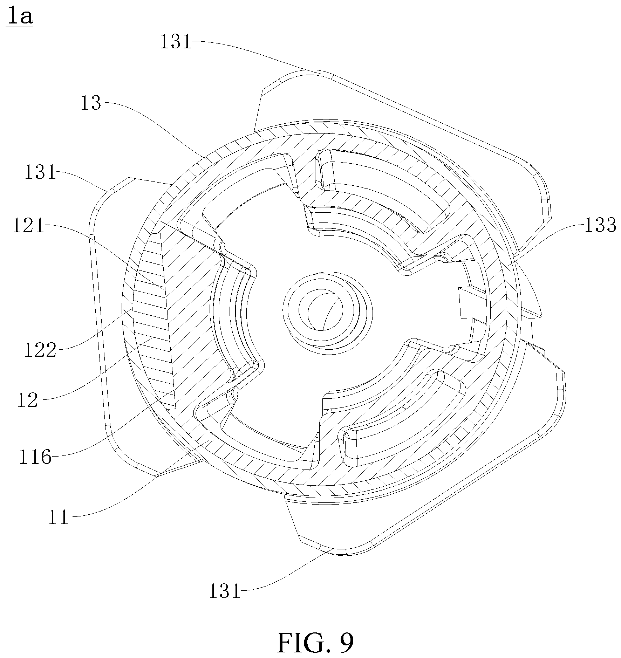

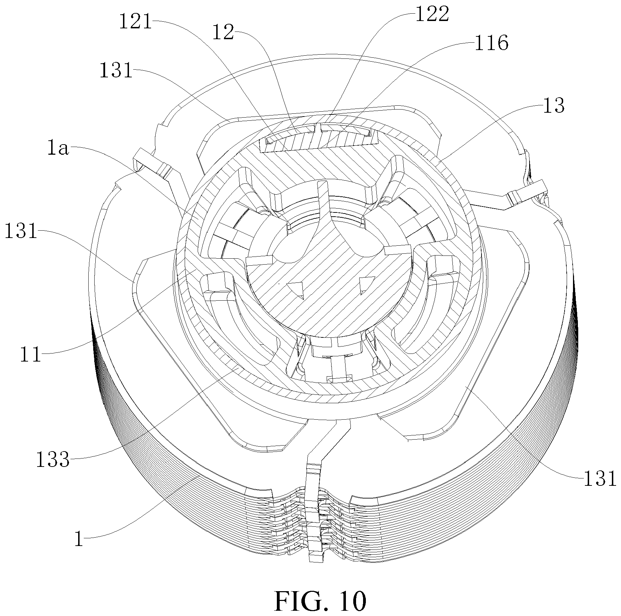

A stator core shaft 1a according to an embodiment of the present invention is described with reference to FIG. 1 to FIG. 10.

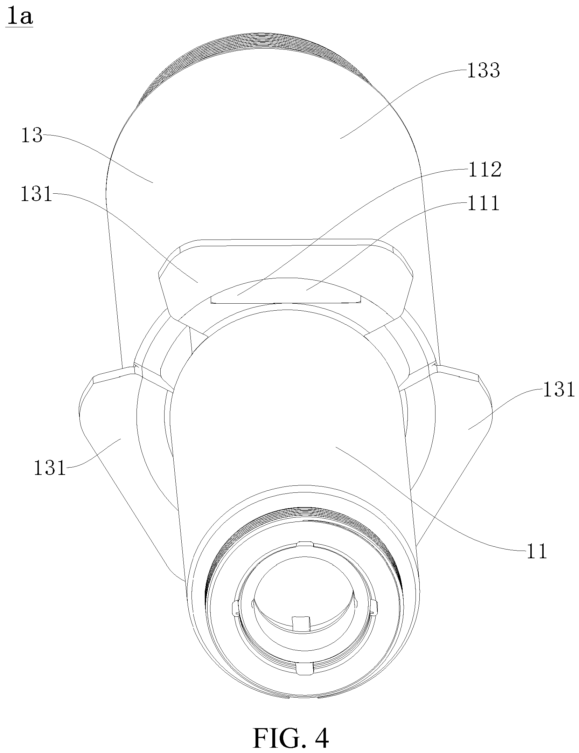

Referring to FIG. 4 to FIG. 6, according to an embodiment of a first aspect of the present invention, the stator core shaft 1a includes a core shaft body 11, a position-sensor induction member 12, and a core shaft sleeve 13. The position-sensor induction member 12 is mounted on an outer peripheral wall of the core shaft body 11. For example, a linear motor 100 includes the stator core shaft 1a, a stator assembly 1, and a promoter assembly 2. When the linear motor 100 operates, the promoter assembly 2 and the stator assembly 1 move relative to each other. The position-sensor induction member 12 is configured to detect a position change when the promoter assembly 2 and the stator assembly 1 move relative to each other.

The core shaft sleeve 13 is sleeved on an outer periphery of the core shaft body 11, and the core shaft sleeve 13 covers the position-sensor induction member 12. The core shaft sleeve 13 is sleeved on the outer periphery of the core shaft body 11. The core shaft sleeve 13 can protect the core shaft body 11 and enhance an overall structural strength of the stator core shaft 1a.

For example, the position-sensor induction member 12 may be a magnetic position-sensor induction member 12, and the core shaft sleeve 13 covers the position-sensor induction member 12. Because the position-sensor induction member 12 is mounted on the outer peripheral wall of the core shaft body 11, the core shaft sleeve 13 can protect the position-sensor induction member 12, to prevent the position-sensor induction member 12 from adsorbing impurities (such as iron filings) due to being exposed on a surface of the core shaft body 11. When a bearing is sleeved on an outer periphery of the stator core shaft 1a, the impurities adsorbed by the position-sensor induction member 12 does not scratch an inner wall of the bearing. For another example, when the bearing reciprocates on a surface of the stator core shaft 1a in an axial direction, because an outer surface of the core shaft sleeve 13 forms a complete circumferential surface, and the core shaft sleeve 13 is sleeved on the outer periphery of the stator core shaft 1a, an outer surface of the stator core shaft 1a forms a complete circumferential surface. The bearing is sleeved on a periphery of the core shaft sleeve 13, so that the inner wall of the bearing can be evenly stressed, thereby reducing bearing wear caused by concentration of local stress on the inner wall of the bearing.

The position-sensor induction member 12 is mounted on the outer peripheral wall of the core shaft body 11, the core shaft sleeve 13 is sleeved on the outer periphery of the core shaft body 11, and the core shaft sleeve 13 covers the position-sensor induction member 12. Because the outer surface of the core shaft sleeve 13 forms the complete circumferential surface, the outer surface of the stator core shaft 1a can form the complete circumferential surface. The bearing is sleeved on the periphery of the core shaft sleeve 13, so that wear of the inner wall of the bearing caused by interference between the position-sensor induction member 12 protruding from the stator core shaft 1a and the inner wall of the bearing can be avoided. In addition, a good sealing structure can be formed on an outer peripheral surface of the stator core shaft 1a. For example, when the promoter assembly 2 of the linear motor 100 is sleeved on the outer periphery of the stator core shaft 1a, it is convenient for the promoter assembly 2 and the stator core shaft 1a to form a good sealing structure, thereby blocking external moisture from entering the linear motor 100, and reducing a possibility of failure of the linear motor 100.

When the linear motor 100 operates, the promoter assembly 2 and the stator assembly 1 move relative to each other, including the following cases: For example, when the linear motor 100 operates, the stator assembly 1 is stationary, and the promoter assembly 2 moves in an axial direction of the linear motor 100. For another example, the promoter assembly 2 is stationary, and the stator assembly 1 moves in the axial direction of the linear motor 100. For another example, both the stator assembly 1 and the promoter assembly 2 move in the axial direction of the linear motor 100.

In some embodiments, the promoter assembly 2 is a primary assembly, and the stator assembly 1 is a secondary assembly. Alternatively, the promoter assembly 2 is a secondary assembly, and the stator assembly 1 is a primary assembly.

In some embodiments, the stator core shaft 1a may be in a shape of a cylinder or in a shape of a barrel.

In some embodiments, the core shaft sleeve 13 may be a circular sleeve.

In some embodiments, the promoter assembly 2 may be in the shape of a barrel.

According to the stator core shaft 1a in the embodiments of the present invention, the core shaft sleeve 13 is sleeved on the outer periphery of the core shaft body 11, and the core shaft sleeve 13 covers the position-sensor induction member 12, so that the outer surface of the stator core shaft 1a can form the complete circumferential surface, and interference between the position-sensor induction member 12 and an external component (for example, a bearing) that is caused because the position-sensor induction member 12 protrudes from the stator core shaft 1a can be avoided. In addition, the good sealing structure can be formed on the outer peripheral surface of the stator core shaft 1a.

Referring to FIG. 4 to FIG. 6, according to some embodiments of the present invention, an accommodating space 111 is defined between the core shaft sleeve 13 and the core shaft body 11. The position-sensor induction member 12 is located in the accommodating space 111, and the accommodating space 111 facilitates assembly of the position-sensor induction member 12 on the core shaft body 11, and makes an overall structure of the position-sensor induction member 12 and the core shaft body 11 compact. In addition, it can be ensured that the core shaft sleeve 13 covers the position-sensor induction member 12, to protect the position-sensor induction member 12, and facilitate the outer surface of the stator core shaft 1a to form the complete circumferential surface, thereby avoiding the interference between the position-sensor induction member 12 and an external component (for example, a bearing) that is caused because the position-sensor induction member 12 protrudes from the outer surface of the stator core shaft 1a.

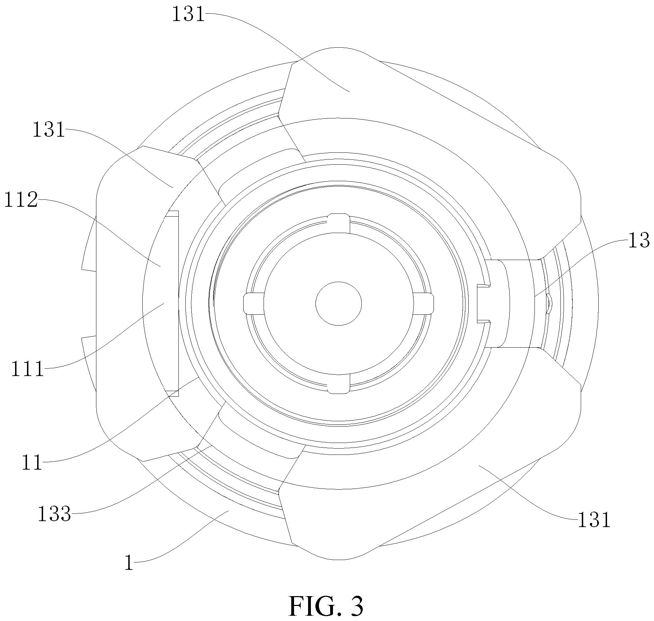

Referring to FIG. 3, FIG. 8, and FIG. 9, according to some embodiments of the present invention, the accommodating space 111 is open on an axial side of the core shaft body 11 to form an insertion port 112. The position-sensor induction member 12 is adapted to be mounted into the accommodating space 111 through the insertion port 112. The insertion port 112 may facilitate assembly of the position-sensor induction member 12. For example, when the position-sensor induction member 12 is mounted, the position-sensor induction member 12 may be mounted into the accommodating space 111 from the insertion port 112.

In addition, the accommodating space 111 is defined between the core shaft sleeve 13 and the core shaft body 11, the position-sensor induction member 12 is located in the accommodating space 111, and the accommodating space 111 is opened on the axial side of the core shaft body 11 to form the insertion port 112, so that after the core shaft sleeve 13 and the core shaft body 11 are assembled, the position-sensor induction member 12 can be mounted into the accommodating space 111 through the insertion port 112.

Because the core shaft sleeve 13 isolates the position-sensor induction member 12 from a position-sensor read head 123, to avoid affecting signal transmission between the position-sensor induction member 12 and the position-sensor read head 123, a wall thickness of the core shaft sleeve 13 is small, for example, a range of the wall thickness of the core shaft sleeve 13 is set to 1 mm to 4 mm. During assembly of the core shaft sleeve 13 and the core shaft body 11, the core shaft sleeve 13 is easily deformed. In addition, a first bearing 31 is sleeved on the outer periphery of the core shaft sleeve 13, and the first bearing 31 has a high requirement on mounting accuracy, otherwise, life of the first bearing 31 is easily affected. Therefore, finish machining needs to be performed on the core shaft sleeve 13 assembled on the core shaft body 11, and iron fillings are easily generated during the finish machining on the core shaft sleeve 13.

If the core shaft body 11 and the position-sensor induction member 12 are first assembled, and then the core shaft sleeve 13 is sleeved on an outer periphery of the core shaft body 11 and the position-sensor induction member 12, when the position-sensor induction member 12 is a magnetic position-sensor induction member, the iron fillings caused by performing finish machining on the deformed core shaft sleeve 13 are easily absorbed by the position-sensor induction member 12, resulting in a detection failure of the position-sensor induction member 12.

The accommodating space 111 is opened on the axial side of the core shaft body 11 to form the insertion port 112, so that the core shaft sleeve 13 may be first assembled with the core shaft body 11 into an assembly, then finish machining is performed on the core shaft sleeve 13, and finally the position-sensor induction member 12 is inserted from the insertion port 112. Finish machining does not need to be performed on the core shaft sleeve 13 after the position-sensor induction member 12 is inserted. In addition, iron fillings caused when the position-sensor induction member 12 is first mounted and then the core shaft sleeve 13 is mounted, and then the finish machining is performed on the core shaft sleeve 13 after the core shaft sleeve 13 is deformed are not adsorbed to the position-sensor induction member 12, thereby preventing the position-sensor induction member 12 from failing in detection.

Referring to FIG. 3, FIG. 8, and FIG. 9, according to some embodiments of the present invention, the position-sensor induction member 12 is in an interference fit with the accommodating space 111, so that a connection manner between the position-sensor induction member 12 and both the core shaft body 11 and the core shaft sleeve 13 is simple and has strong stability.

Referring to FIG. 3, FIG. 8, and FIG. 9, according to some embodiments of the present invention, the position-sensor induction member 12 is fixed in the accommodating space 111 by an adhesive layer, so that the connection manner between the position-sensor induction member 12 and both the core shaft body 11 and the core shaft sleeve 13 is simple and has strong stability.

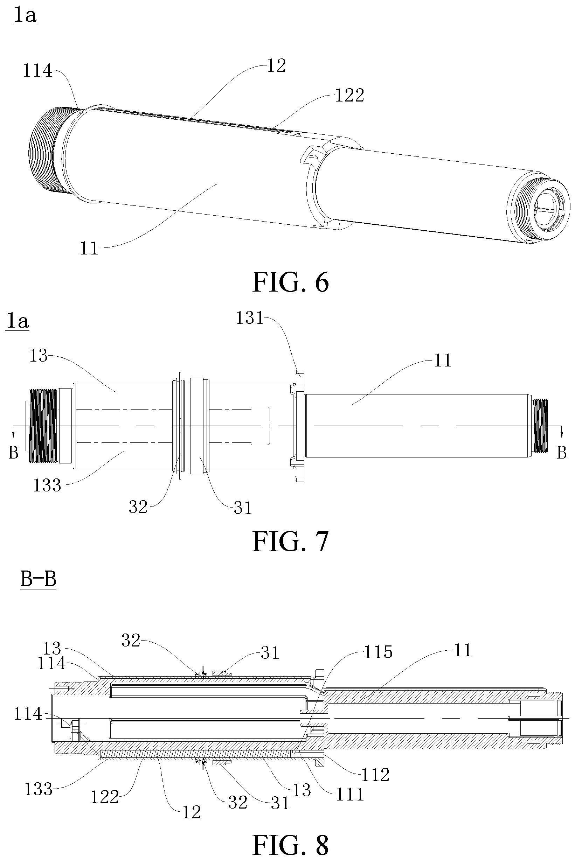

Referring to FIG. 8 to FIG. 10, according to some embodiments of the present invention, a glue filling gap is defined between the position-sensor induction member 12 and an inner wall of the accommodating space 111. The adhesive layer is filled in the glue filling gap, so that the position-sensor induction member 12 can be closely attached to the core shaft body 11 and the core shaft sleeve 13. The filling of the adhesive layer in the glue filling gap can seal the accommodating space 111, thereby preventing external impurities (for example, dust and iron fillings) from entering the accommodating space 111 through the glue filling gap and affecting the position-sensor induction member 12.

For example, a filling process of the adhesive layer may be as follows: The core shaft sleeve 13 is sleeved on the outer periphery of the core shaft body 11 and the accommodating space 111 is defined between the core shaft sleeve 13 and the core shaft body 11. The accommodating space 111 is open on the axial side of the core shaft body 11 to form the insertion port 112. The position-sensor induction member 12 is mounted into the accommodating space 111 through the insertion port 112, and the glue filling gap is defined between the position-sensor induction member 12 and the inner wall of the accommodating space 111. Glue filling is performed in the glue filling gap through the insertion port 112, and the adhesive layer is formed after solidification, thereby completing the filling process of the adhesive layer in the glue filling gap.

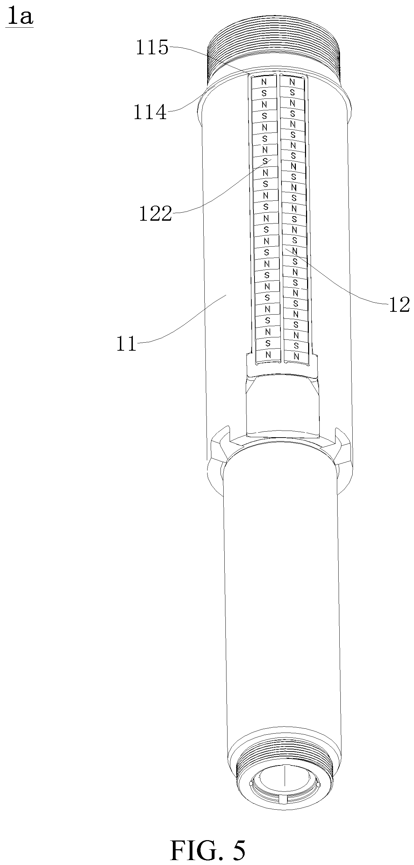

Referring to FIG. 5 and FIG. 6, according to some embodiments of the present invention, a limiting convex ring 114 arranged around the core shaft body 11 is formed on an outer peripheral wall of the core shaft body 11, and an axial end of the core shaft sleeve 13 abuts against the limiting convex ring 114 to axially limit the core shaft sleeve 13. The limiting convex ring 114 can enhance overall structural strength of the core shaft body 11, and can axially limit assembly of the core shaft sleeve 13, to ensure an accurate assembly position of the core shaft sleeve 13 on the core shaft body 11, and can also limit moving of the core shaft sleeve 13 at the axial end of the core shaft body 11, thereby enhancing stability and reliability of fit between the core shaft sleeve 13 and the core shaft body 11.

For example, an assembly process of the core shaft sleeve 13 may be as follows: The core shaft sleeve 13 is sleeved on the core shaft body 11 and moves in the axial direction of the core shaft body 11, so that the core shaft sleeve 13 moves from the axial end of the core shaft body 11 away from the limiting convex ring 114 toward a direction approaching the limiting convex ring 114. When the axial end of the core shaft sleeve 13 abuts against the limiting convex ring 114, assembly of the core shaft sleeve 13 on the core shaft body 11 is completed.

Referring to FIG. 5 and FIG. 6, according to some embodiments of the present invention, the limiting convex ring 114 does not protrude from the outer peripheral surface of the core shaft sleeve 13, so that an overall structure of the core shaft body 11 and the core shaft sleeve 13 is more compact, and interference between the limiting convex ring 114 and an outside structure of the stator core shaft 1a that is caused because the limiting convex ring 114 protrudes from the outer peripheral surface of the core shaft sleeve 13 can be avoided.

Referring to FIG. 8 to FIG. 10, according to some embodiments of the present invention, an insertion port 112 is defined between an other axial end of the core shaft sleeve 13 and the core shaft body 11. The position-sensor induction member 12 is adapted to be mounted into the accommodating space 111 through the insertion port 112. The insertion port 112 defined by the other axial end of the core shaft sleeve 13 and the core shaft body 11 together may facilitate assembly of the position-sensor induction member 12. For example, when the position-sensor induction member 12 is mounted, the position-sensor induction member 12 may be mounted into the accommodating space 111 from the insertion port 112.

Referring to FIG. 5 and FIG. 6, according to some embodiments of the present invention, the outer peripheral wall of the core shaft body 11 is formed with a mounting groove 115. The position-sensor induction member 12 is mounted in the mounting groove 115. The mounting groove 115 forms at least a part of the accommodating space 111. The mounting groove 115 can facilitate assembly of the position-sensor induction member 12, and can make an overall structure of the position-sensor induction member 12 and the core shaft body 11 compact.

That the mounting groove 115 forms at least a part of the accommodating space 111 may include the following cases: For example, the mounting groove 115 may form an entire part of the accommodating space 111. For another example, the mounting groove 115 may form a part of the accommodating space 111.

Referring to FIG. 5 and FIG. 6, according to some embodiments of the present invention, at least a part of a bottom wall of the mounting groove 115 is formed as a first mounting surface 116, a surface of the position-sensor induction member 12 facing the mounting surface is a second mounting surface 121, and both the first mounting surface 116 and the second mounting surface 121 are planes. Both the first mounting surface 116 and the second mounting surface 121 are planes, which helps form a stable connection between the position-sensor induction member 12 and the mounting groove 115.

That at least a part of the bottom wall of the mounting groove 115 is formed as the first mounting surface 116 may include the following cases: For example, an entire bottom wall of the mounting groove 115 may be formed as the first mounting surface 116. For another example, a part of a bottom of the mounting groove 115 may form the first mounting surface 116.

Referring to FIG. 5 and FIG. 6, according to some embodiments of the present invention, the first mounting surface 116 is attached to the second mounting surface 121, and both the first mounting surface 116 and the second mounting surface 121 are planes, which can facilitate the position-sensor induction member 12 to be closely attached to the mounting groove 115 to form stable contact, so that an assembly process of the position-sensor induction member 12 and the mounting groove 115 is simple, and overall stability of the position-sensor induction member 12 and the core shaft body 11 and the core shaft sleeve 13 can be improved.

Referring to FIG. 5 to FIG. 7, according to some embodiments of the present invention, a surface of the position-sensor induction member 12 facing away from the bottom wall of the mounting groove 115 is a sensor outer surface 122, the sensor outer surface 122 is an arc-shaped surface and is coaxially arranged with the core shaft body 11, and an outer peripheral wall surface of the core shaft body 11 is a circumferential surface, so that the sensor outer surface 122 matches the outer peripheral wall surface of the core shaft body 11. An inner peripheral wall of the core shaft sleeve 13 forms a circumferential surface, so that the core shaft sleeve 13 covers the outer periphery of the core shaft body 11 and covers the position-sensor induction member 12. In this way, assembly of the core shaft sleeve 13 with the core shaft body 11 and the position-sensor induction member 12 is smooth, and the position-sensor induction member 12 can be avoided from protruding from the outer surface of the core shaft body 11. The outer surface of the stator core shaft 1a forms a complete circumferential surface. For example, when the bearing is sleeved on the outer surface of the stator core shaft 1a, the bearing can be evenly stressed.

Referring to FIG. 4, FIG. 6, and FIG. 7, according to some embodiments of the present invention, the core shaft sleeve 13 is in an interference fit with the core shaft body 11, so that a connection manner between the core shaft sleeve 13 and the core shaft body 11 is simple and has strong stability, which can reduce a possibility that the core shaft sleeve 13 is loose or offset due to vibration or external impact of the linear motor 100.

Referring to FIG. 5 and FIG. 6, according to some embodiments of the present invention, the position-sensor induction member 12 is a magnetic position-sensor induction member, the core shaft sleeve 13 is a non-magnetic conductive member, and the magnetic position-sensor induction member detects a position by detecting a change in a magnetic field. The core shaft sleeve 13 is a non-magnetic conductive member, to avoid interference with the magnetic position-sensor induction member due to magnetization of the core shaft sleeve 13, ensure that the magnetic field of the magnetic position-sensor induction member is not affected, and accuracy of detection of the magnetic position-sensor induction member is improved.

In some embodiments, the core shaft sleeve 13 may be made of non-magnetic steel.

Referring to FIG. 3 to FIG. 5, according to some embodiments of the present invention, an axial dimension of the core shaft sleeve 13 is larger than an axial dimension of the position-sensor induction member 12 along the core shaft body 11 and smaller than an axial dimension of the core shaft body 11. The axial dimension of the core shaft sleeve 13 is larger than the axial dimension of the position-sensor induction member 12 along the core shaft body 11, which can ensure that the core shaft sleeve 13 covers the position-sensor induction member 12 to effectively protect the position-sensor induction member 12. In addition, the axial dimension of the core shaft sleeve 13 is smaller than the axial dimension of the core shaft body 11. The core shaft sleeve 13 is sleeved on the outer periphery of the core shaft body 11 and does not cover an entire core shaft body 11, which may not affect cooperation of the core shaft body 11 with another component or another functional requirement.

The axial dimension of the core shaft sleeve 13 is larger than the axial dimension of the position-sensor induction member 12 along the core shaft body 11 and smaller than the axial dimension of the core shaft body 11, so that the position detector induction member 12 can be effectively protected, a service life of the position-sensor induction member 12 can be extended, and cooperation of the core shaft body 11 with another component or another functional requirement is not affected.

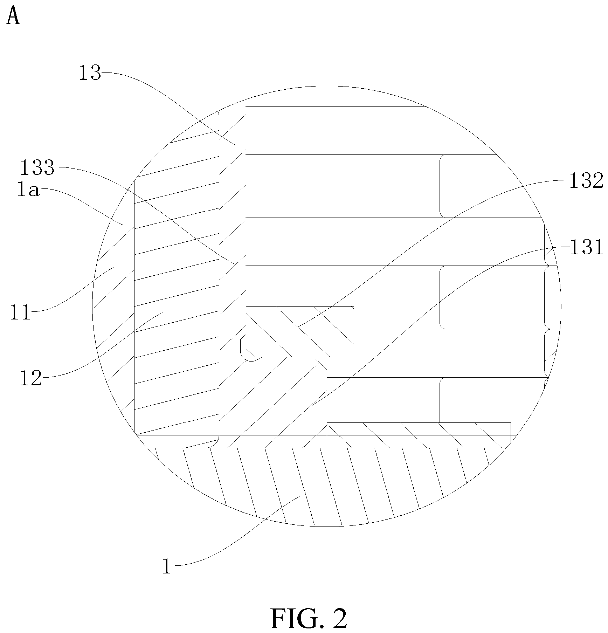

Referring to FIG. 1 and FIG. 2, according to some embodiments of the present invention, the core shaft sleeve 13 includes a sleeve body 133 and a mounting boss 131. The mounting boss 131 is arranged on an outer peripheral wall of the sleeve body 133, and the mounting boss 131 is configured to mount and fix a buffer pad 132. The mounting boss 131 may provide a stable support point for the stator core shaft 1a, for example, may provide a stable support point when the stator core shaft 1a is assembled with another component, to facilitate fixing and support of the stator core shaft 1a, thereby facilitating assembly of the stator core shaft 1a with another component. In addition, the mounting boss 131 may facilitate mounting and fixing of the buffer pad 132. In some embodiments, the buffer pad 132 may be in a ring shape, and the buffer pad 132 may be made of a material of Nylon or rubber.

In some embodiments, the linear motor 100 includes the stator assembly 1 and the stator core shaft 1a. The stator assembly 1 is sleeved on the outer periphery of the stator core shaft 1a. The outer surface of the stator core shaft 1a forms the complete circumferential surface. An axial end of the core shaft sleeve 13 abuts against the limiting convex ring 114. The mounting boss 131 is located at an other axial end of the core shaft sleeve 13. The mounting boss 131 extends in a circumferential direction of the core shaft sleeve 13 and the mounting boss 131 protrudes from the outer peripheral wall of the core shaft sleeve 13. There may be multiple mounting bosses 131. The multiple mounting bosses 131 are spaced apart in the circumferential direction of the core shaft sleeve 13. The mounting boss 131 is fixed, the stator core shaft 1a may be conveniently fixed and supported, so that assembly between the stator core shaft 1a and the stator assembly 1 is more convenient.

According to an embodiment of the present invention, the linear motor 100 includes the stator assembly 1 and the promoter assembly 2. The stator assembly 1 includes a winding and a stator. The promoter assembly 2 is sleeved on an outer periphery of the stator assembly 1. The promoter assembly 2 includes a motor housing 23 and magnetic steel 22. The magnetic steel 22 is fixed to an inner wall of the motor housing 23. The buffer pad 132 is mounted and fixed on a side of the mounting boss 131 away from the limiting convex ring 114. When the linear motor 100 operates, the promoter assembly 2 reciprocates in the axial direction of the stator assembly 1. The buffer pad 132 is mounted and fixed on the side of the mounting boss 131 away from the limiting convex ring 114, so that movement of the promoter assembly 2 along the stator assembly 1 can be limited and buffered, and an axial movement distance of the promoter assembly 2 can be limited. In addition, an impact force during relative movement of the promoter assembly 2 and the stator assembly 1 can be alleviated, thereby reducing frictional wear generated between the promoter assembly 2 and the stator assembly 1 due to collision, and prolonging a service life of the linear motor 100.

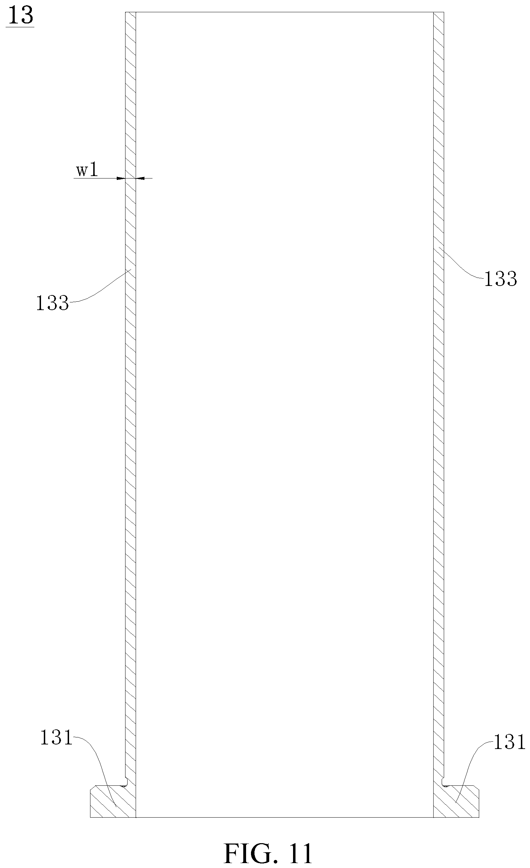

Referring to FIG. 1 and FIG. 11, according to some embodiments of the present invention, a wall thickness w1 of the core shaft sleeve 13 ranges from 1 mm to 4 mm. For example, the wall thickness w1 of the core shaft sleeve 13 may be 1 mm, 2 mm, 2.5 mm, 3.5 mm, 4 mm, or the like. The wall thickness w1 of the core shaft sleeve 13 is not less than 1 mm, so that the core shaft sleeve 13 has sufficient structural strength to resist a specific external impact. The wall thickness w1 of the core shaft sleeve 13 is not greater than 4 mm, which can ensure normal signal transmission between the position-sensor induction member 12 and the position-sensor read head 123. The wall thickness w1 of the core shaft sleeve ranges from 1 mm to 4 mm, so that the core shaft sleeve 13 has sufficient structural strength to resist a specific external impact. In addition, normal signal transmission between the position-sensor induction member 12 and the position-sensor read head 123 can be ensured.

According to some embodiments of the present invention, the core shaft body 11 is an integrated part. In this way, reliability of the core shaft body 11 can be improved, overall structural strength of the core shaft body 11 can be improved, and an assembly speed of the core shaft body 11 and an assembly member (for example, the core shaft sleeve 13) can be increased.

Referring to FIG. 1, according to an embodiment of a second aspect of the present invention, the linear motor 100 includes the stator core shaft 1a, the stator assembly 1, and the promoter assembly 2 according to the embodiment of the first aspect of the present invention. When the linear motor 100 operates, the stator assembly 1 and the promoter assembly 2 may move relative to each other in the axial direction of the linear motor 100. When the linear motor 100 is used in an electromagnetic suspension of a vehicle, the stator assembly 1 may be connected to a vehicle body, and the promoter assembly 2 may be connected to a wheel. For example, an upper end of the stator assembly 1 is connected to the vehicle body, and a lower end of the promoter assembly 2 is connected to the wheel.

The stator assembly 1 is sleeved on the outer periphery of the stator core shaft 1a and the stator assembly 1 is fixed relative to the stator core shaft 1a. The stator assembly 1 and the core shaft sleeve 13 are arranged in the axial direction of the core shaft body 11, so that interference between the stator assembly 1 and the core shaft sleeve 13 can be avoided.

The promoter assembly 2 is sleeved on the outer periphery of the stator assembly 1, and the promoter assembly 2 and the stator assembly 1 are relatively movable in the axial direction of the stator core shaft 1a. An axial end of the promoter assembly 2 is provided with an assembly through hole 21, and the core shaft sleeve 13 passes through the assembly through hole 21. The assembly through hole 21 may facilitate mounting of the core shaft sleeve 13, thereby facilitating assembly of the stator assembly 1 and the promoter assembly 2.

A position-sensor read head 123 corresponding to the position-sensor induction member 12 is arranged on the promoter assembly 2, and the position-sensor read head 123 may read a signal generated by the position-sensor induction member 12, to determine a position change situation when the promoter assembly 2 and the stator assembly 1 move relative to each other.

In some embodiments, referring to FIG. 1, according to an embodiment of the present invention, the linear motor 100 includes the promoter assembly 2, the stator core shaft 1a, and the first bearing 31. The promoter assembly 2 and the first bearing 31 are sleeved on the outer periphery of the stator core shaft 1a. When the linear motor 100 operates, the stator assembly 1 and the promoter assembly 2 move relative to each other, and the first bearing 31 reciprocates with the promoter assembly 2 relative to the stator core shaft 1a. The core shaft sleeve 13 is sleeved on the outer periphery of the core shaft body 11, and the core shaft sleeve 13 covers the position-sensor induction member 12, which can avoid a case that the position-sensor induction member 12 interferes with the first bearing 31 due to protruding from the stator core shaft 1a, resulting in wear on the first bearing 31 and even jamming of the linear motor 100. In addition, the outer peripheral surface of the stator core shaft 1a may form a good sealing structure, and may cooperate with the promoter assembly 2 to form a good sealing structure, thereby facilitating the linear motor 100 to form a good sealing structure, and avoiding a case that external impurities (for example, moisture) enter the linear motor 100 and cause the linear motor 100 to fail.

According to the linear motor 100 in the embodiments of the present invention, the stator core shaft 1a is arranged, the core shaft sleeve 13 is sleeved on the outer periphery of the core shaft body 11, and the core shaft sleeve 13 covers the position-sensor induction member 12, so that the outer surface of the stator core shaft 1a can form the complete circumferential surface, and interference between the position-sensor induction member 12 and an external component (for example, a bearing) that is caused because the position-sensor induction member 12 protrudes from the stator core shaft 1a can be avoided. In addition, the good sealing structure can be formed on the outer peripheral surface of the stator core shaft 1a.

Referring to FIG. 1 and FIG. 7, according to some embodiments of the present invention, the linear motor 100 includes the first bearing 31, the first bearing 31 is located in the assembly through hole 21, the first bearing 31 is mounted on the promoter assembly 2, and the first bearing 31 is sleeved on the outer periphery of the core shaft sleeve 13. The first bearing 31 is sleeved on the outer periphery of the core shaft sleeve 13 and the first bearing 31 is mounted on the promoter assembly 2. The first bearing 31 cooperates with the stator core shaft 1a to support the stator core shaft 1a, which can enhance stability of the stator core shaft 1a and reduce vibration generated by the stator core shaft 1a when the linear motor 100 operates.

Referring to FIG. 1 and FIG. 7, according to some embodiments of the present invention, the linear motor 100 includes the oil seal 32, the oil seal 32 is located in the assembly through hole 21, and the oil seal 32 is mounted on the promoter assembly 2. The oil seal 32 is sleeved on the outer periphery of the core shaft sleeve 13 and the oil seal 32 is spaced apart from the first bearing 31 in the axial direction. The oil seal 32 can enhance a sealing effect of the linear motor 100, prevent substances inside the linear motor 100 from leaking from the assembly through hole 21, and can block external impurities (for example, dust and moisture) from entering the linear motor 100, thereby protecting an internal environment of the linear motor 100 and prolonging the service life of the linear motor 100. In addition, the oil seal 32 is spaced apart from the first bearing 31 in the axial direction, so that interference between the oil seal 32 and the first bearing 31 can be avoided, and normal operation of the sealing effect of the oil seal 32 on the linear motor 100 and a supporting effect of the first bearing 31 on the stator core shaft 1a can be ensured.

An end of the assembly through hole 21 that runs through the promoter assembly 2 is a hole outer end, and the oil seal 32 is located on a side of the first bearing 31 adjacent to the hole outer end. The oil seal 32 is located on the side of the first bearing 31 adjacent to the hole outer end, so as to prevent external impurities (for example, dust) from entering the inside of the first bearing 31, thereby prolonging a service life of the first bearing 31.

Referring to FIG. 1 and FIG. 7, according to some embodiments of the present invention, the promoter assembly 2 includes the motor housing 23, and the promoter assembly 2 is fixed to an inner wall of the motor housing 23. The linear motor 100 further includes a guide rod 33. The guide rod 33 is arranged in the motor housing 23 and the guide rod 33 extends in an axial direction of the rotor. the core shaft body 11 forms a guide channel 117 extending in the axial direction of the stator core shaft 1a, and the guide rod 33 is slidably accommodated in the guide channel 117 in the axial direction of the stator assembly 1. The guide rod 33 can guide the movement of the promoter assembly 2. Through cooperation between the guide channel 117 and the guide rod 33, the movement of the guide rod 33 can be guided and limited, to ensure the movement of the guide rod 33 in a set direction and a set trajectory, and prevent the guide rod 33 from being separated from the stator core shaft 1a during sliding, thereby ensuring the movement of the promoter assembly 2 in the set direction and the set trajectory.

According to an embodiment of the present invention, the linear motor 100 further includes a second bearing 34. The second bearing 34 is located in the guide channel 117, and the second bearing 34 is sleeved on an outer periphery of the guide rod 33. The second bearing 34 is mounted on the stator core shaft 1a.

The promoter assembly 2 might be a primary assembly and the stator assembly 1 is a secondary assembly. In this case, the promoter assembly 2 includes the motor housing 23 and the winding, and the winding is mounted in the motor housing 23. In this case, the motor housing 23 may be used as an iron core, and the stator assembly 1 includes the magnetic steel 22. Alternatively, the promoter assembly 2 is a secondary assembly and the stator assembly 1 is a primary assembly. The promoter assembly 2 includes the motor housing 23 and the magnetic steel 22. The magnetic steel 22 is mounted on the inner wall of the motor housing 23. The stator assembly 1 includes an iron core and the winding, and the winding is mounted on the iron core.

Referring to FIG. 1, according to some embodiments of the present invention, the position-sensor read head 123 is located on an axial side of the promoter assembly 2 and the position-sensor read head 123 is adjacent to the assembly through hole 21. The position-sensor read head 123 is located on the axial side of the promoter assembly 2 and the position-sensor read head 123 is adjacent to the assembly through hole 21, which can facilitate mounting of the position-sensor read head 123 on the promoter assembly 2 through the assembly through hole 21. In addition, the position-sensor read head 123 is located on an outer peripheral side of the core shaft sleeve 13, so that the signal generated by the position-sensor induction member 12 located inside the core shaft sleeve 13 can be transmitted to the position-sensor read head 123 more quickly, thereby improving the efficiency of signal transmission between the position-sensor read head 123 and the position-sensor induction member 12.

Referring to FIG. 1 and FIG. 7, an electromagnetic suspension according to an embodiment of a third aspect of the present invention includes the linear motor 100 according to the embodiment of the second aspect of the present invention.

According to the electromagnetic suspension in the embodiments of the present invention, the foregoing linear motor 100 is arranged, the foregoing stator core shaft 1a is arranged, , the core shaft sleeve 13 is sleeved on the outer periphery of the core shaft body 11, and the core shaft sleeve 13 covers the position-sensor induction member 12, so that the outer surface of the stator core shaft 1a can form the complete circumferential surface, and interference between the position-sensor induction member 12 and an external component (for example, a bearing) that is caused because the position-sensor induction member 12 protrudes from the stator core shaft 1a can be avoided. In addition, the good sealing structure can be formed on the outer peripheral surface of the stator core shaft 1a.

Referring to FIG. 1 and FIG. 7, a vehicle according to an embodiment of a fourth aspect of the present invention includes the electromagnetic suspension according to the embodiment of the third aspect of the present invention.

According to the vehicle in the embodiments of the present invention, the foregoing electromagnetic suspension is arranged, the electromagnetic suspension includes the linear motor 100, the foregoing stator core shaft 1a is arranged, the foregoing stator core shaft 1a is arranged, the foregoing linear motor 100 is arranged,, the core shaft sleeve 13 is sleeved on the outer periphery of the core shaft body 11, and the core shaft sleeve 13 covers the position-sensor induction member 12, so that the outer surface of the stator core shaft 1a can form the complete circumferential surface, and the position-sensor induction member 12 can be avoided from interfering with the external component (for example, a bearing) due to protruding from the stator core shaft 1a. In addition, the good sealing structure can be formed on the outer peripheral surface of the stator core shaft 1a.

As discussed, embodiments can provide a stator core shaft , comprising: a core shaft body; a position-sensor induction member, mounted on an outer peripheral wall of the core shaft body ; and a core shaft sleeve that is sleeved around the core shaft body and covers the position-sensor induction member.

In some embodiments, an accommodating space (or region) is defined between the core shaft sleeve and the core shaft body, and the position-sensor induction member is located in the accommodating space.

Embodiments can provide a linear motor, comprising: a stator core shaft according to any one of the above mentioned embodiments; a stator assembly, the stator assembly being sleeved on an outer periphery of the stator core shaft and fixed relative to the stator core shaft, and the stator assembly and the core shaft sleeve being arranged in an axial direction of the core shaft body; and a promoter assembly, sleeved on an outer periphery of the stator assembly, the promoter assembly and the stator assembly being relatively movable in an axial direction of the stator core shaft, an axial end of the promoter assembly being provided with an assembly through hole, the core shaft sleeve passing through the assembly through hole, and a position-sensor read head corresponding to the position-sensor induction member being provided on the promoter assembly.

Embodiments can provide an electromagnetic suspension, comprising: a linear motor according to any one of the above mentioned embodiments.

Embodiments can provide a vehicle, comprising an electromagnetic suspension according to any one of the above mentioned embodiments.

In the descriptions of this specification, descriptions using reference terms "an embodiment", "some embodiments", "an exemplary embodiment", "an example", "a specific example", or "some examples" mean that specific characteristics, structures, materials, or features described with reference to the embodiment or example are included in at least one embodiment or example of the present invention. In this specification, schematic descriptions of the foregoing terms are not necessarily directed at the same embodiment or example. Moreover, the specific features, structures, materials, or characteristics described may be combined in any one or more embodiments or examples in an appropriate manner.

Although the embodiments of the present invention have been shown and described, a person of ordinary skill in the art may understand that: various changes, modifications, replacements and variations may be made to the embodiments without departing from the principles of the present invention, and the scope of the present invention is as defined by the appended claims and their equivalents.

In the drawings:
100. Linear motor;
1. Stator assembly; 1a. Stator core shaft; 11. Core shaft body; 111. Accommodating space; 112. Insertion port; 114. Limiting convex ring; 115. Mounting groove; 116. First mounting surface; 117. Guide channel; 12. Position-sensor induction member; 121. Second mounting surface; 122. Sensor outer surface; 123. Position-sensor read head; 13. Core shaft sleeve; 131. Mounting boss; 132. Buffer pad; 133. Sleeve body;
2. Promoter assembly; 21. Assembly through hole; 22. Magnetic steel; 23. Motor housing;
31. First bearing 32. Oil seal; 33. Guide rod; 34. Second bearing.

## Claims

1. A stator core shaft (1a), comprising:
a core shaft body (11);
a position-sensor induction member (12), the position-sensor induction member (12) being mounted on an outer peripheral wall of the core shaft body (11); and
a core shaft sleeve (13), the core shaft sleeve (13) being sleeved around the core shaft body (11) and covering the position-sensor induction member (12).

2. The stator core shaft (1a) according to claim 1, wherein an accommodating space (111) is defined between the core shaft sleeve (13) and the core shaft body (11), and the position-sensor induction member (12) is located in the accommodating space (111).

3. The stator core shaft (1a) according to claim 2, wherein the accommodating space (111) is open on an axial side of the core shaft body (11) to form an insertion port (112), and the position-sensor induction member (12) is adapted to be mounted into the accommodating space (111) through the insertion port (112).

4. The stator core shaft (1a) according to claim 2 or 3, wherein the position-sensor induction member (12) is fixed in the accommodating space (111) by an adhesive layer.

5. The stator core shaft (1a) according to any one of claims 2 to 4, wherein a limiting convex ring (114) arranged around the core shaft body (11) is arranged on an outer peripheral wall of the core shaft body (11), and an axial end of the core shaft sleeve (13) abuts against the limiting convex ring (114) to axially limit the core shaft sleeve (13);
optionally wherein the limiting convex ring (114) does not protrude from an outer peripheral surface of the core shaft sleeve (13);
optionally wherein an other axial end of the core shaft sleeve (13) and the core shaft body (11) surrounds an insertion port (112), and the position-sensor induction member (12) is configured to be mounted into the accommodating space (111) through the insertion port (112).

6. The stator core shaft (1a) according to any one of claims 2 to 5, wherein a mounting groove (115) is arranged on the outer peripheral wall of the core shaft body (11), the position-sensor induction member (12) is mounted in the mounting groove (115), and the mounting groove (115) forms at least a part of the accommodating space (111);
optionally wherein at least a part of a bottom wall of the mounting groove (115) forms a first mounting surface (116), a surface of the position-sensor induction member (12) facing the mounting surface is a second mounting surface (121), and both the first mounting surface (116) and the second mounting surface (121) are planes, further optionally wherein the first mounting surface (116) is attached to the second mounting surface (121);
optionally wherein the core shaft sleeve (13) is in an interference fit with the core shaft body (11).

7. The stator core shaft (1a) according to any one of claims 1 to 6, wherein the position-sensor induction member (12) is a magnetic position-sensor induction member, and the core shaft sleeve (13) is a non-magnetic conductive member.

8. The stator core shaft (1a) according to any one of claims 1 to 7, wherein an axial dimension of the core shaft sleeve (13) is larger than an axial dimension of the position-sensor induction member (12) along the core shaft body (11) and smaller than an axial dimension of the core shaft body (11); and/or
wherein the core shaft sleeve (13) comprises a sleeve body (133) and a mounting boss (131), the mounting boss (131) is arranged on an outer peripheral wall of the sleeve body (133), and the mounting boss (131) is configured to mount and fix a buffer pad (132); and/or
wherein a wall thickness of the core shaft sleeve (13) ranges from 1 mm to 4 mm.

9. The stator core shaft (1a) according to any one of claims 1 to 8, wherein the core shaft body (11) is an integrated part.

10. A linear motor (100), comprising:
the stator core shaft (1a) according to any one of claims 1 to 9;
a stator assembly (1), the stator assembly (1) being sleeved on an outer periphery of the stator core shaft (1a) and fixed relative to the stator core shaft (1a), and the stator assembly (1) and the core shaft sleeve (13) being arranged in an axial direction of the core shaft body (11); and
a promoter assembly (2), the promoter assembly (2) being sleeved on an outer periphery of the stator assembly (1), the promoter assembly (2) and the stator assembly (1) being relatively movable in an axial direction of the stator core shaft (1a), an axial end of the promoter assembly (2) being provided with an assembly through hole (21), the core shaft sleeve (13) passing through the assembly through hole (21), and a position-sensor read head (123) corresponding to the position-sensor induction member (12) being provided on the promoter assembly (2).

11. The linear motor (100) according to claim 10, comprising: a first bearing (31), the first bearing (31) being located in the assembly through hole (21) and mounted in the promoter assembly (2), and the first bearing (31) being sleeved on an outer periphery of the core shaft sleeve (13);
optionally comprising: an oil seal (32), the oil seal (32) being located in the assembly through hole (21) and mounted in the promoter assembly (2), the oil seal (32) being sleeved on the outer periphery of the core shaft sleeve (13) and spaced apart from the first bearing (31) in an axial direction, one end of the assembly through hole (21) running through the promoter assembly (2) being a hole outer end, and the oil seal (32) being located on a side of the first bearing (31) adjacent to the hole outer end.

12. The linear motor (100) according to claim 10 or 11, wherein the promoter assembly (2) comprises a motor housing (23), the linear motor (100) further comprises a guide rod (33), the guide rod (33) is arranged in the motor housing (23) and extends in an axial direction of the promoter assembly (2), a guide channel (117) extending in the axial direction of the stator core shaft (1a) is formed on the core shaft body (11), and the guide rod (33) is slidably accommodated in the guide channel (117) in an axial direction of the stator assembly (1).

13. The linear motor (100) according to any one of claims 10 to 12, wherein the position-sensor read head (123) is located on an axial side of the promoter assembly (2) and adjacent to the assembly through hole (21), and the position-sensor read head (123) is located on an outer peripheral side of the core shaft sleeve (13).

14. An electromagnetic suspension, comprising: the linear motor (100) according to any one of claims 10 to 23.

15. A vehicle, comprising: the electromagnetic suspension according to claim 14.
